Europäisches Patentamt

European Patent Office

Office européen des brevets

(19)

(11) Publication number: **0 224 620**
**A1**

# (12) EUROPEAN PATENT APPLICATION

(21) Application number: **85308399.6**

(22) Date of filing: **18.11.85**

(51) Int. Cl.⁴ **G07B 17/00** , **F16H 31/00**

(43) Date of publication of application:
**10.06.87 Bulletin 87/24**

(84) Designated Contracting States:
**AT BE CH DE FR GB IT LI LU NL SE**

(71) Applicant: **Pitney Bowes PLC**
**The Pinnacles**
**Harlow Essex CM19 5BD(GB)**

(72) Inventor: **Bannister, Ray L.**
**14 Capel Lodge Kew Road**
**Richmond Surrey TW9 3JU(GB)**
Inventor: **Close, Frederick C.**
**3 Gypsy Close**
**Great Amwell Hertfordshire(GB)**
Inventor: **Loeber, Peter J.**
**121 Greenfield**
**Earith Cambridgeshire(GB)**

(74) Representative: **Pilch, Adam John Michael et al**
**c/o D. Young & Co. 10 Staple Inn**
**London WC1V 7RD(GB)**

## (54) Push button position-changing mechanism.

(57) A push button position-changing mechanism particularly suitable for use a value selection mechanism in a postage meter includes push buttons 24, 26 on opposite sides of a gear wheel 32, each depression of the buttons causing actuating arms 28,30 to increment the wheel by one unit in one direction or the other. Typically four such mechanisms are provided in a postage meter, each inputting appropriate decade of postal value via the buttons 24, 26, arms 28, 30, value indicator wheel 10 and gear train 14, 16, 18 to a print wheel setting mechanism (not shown) in a print drum of the meter.

To prevent jamming, the actuating arms 28, 30 are allowed a degree of resilience in both upward and downward directions, in the event that one of the push buttons 24, 26 is depressed while a franking operation is causing the value selection wheel 10 to rotate. The arm 28 is acted on by a spring 44 and ball 46 arrangement for resilience in one direction. For resilience in the other direction, an outer cylinder portion 34 is lifted relative to the stem 50 of push button 26 against the resistance of a spring 52, and the arm 30 will be urged away from the rotating wheel 10.

In an alternative embodiment, the actuating arms act on individual gear wheels carried by a common shaft, such that each arm acts on its own gear wheel. The rotational motion provided by the push buttons is then at right angles compared to the above-described arrangement.

FIG.4

## PUSH BUTTON POSITION-CHANGING MECHANISM

This invention relates to a push button position-changing mechanism, particularly but not exclusively when used as a value selection mechanism in a postage meter.

There are many situations in which it is required to change the mechanical position of part of a mechanism, for example the rotational position of a shaft or of a gear on that shaft. One such requirement arises in postage meters, in which there must be provided the ability to change values to be printed on envelopes or labels. In one common arrangement, a printing drum is provided in which separate value print wheels can rotate to present a selected value on the drum for printing. Each such print wheel corresponds to one decade of the postage value to be printed. In such an arrangement, this rotation of the value print wheels can be achieved by longitudinal movements of corresponding value selection racks mounted within the print drum shaft. Since the whole of this shaft has to rotate in order to provide the required printing action of the print drum, some means has to be provided for adjusting the longitudinal position of each value selection rack with respect to the shaft. One way of achieving this is to provide gear wheels mounted concentrically on the shaft and able to move relative to the shaft, with the provision of means for translating the rotational movement of each gear wheel into an appropriate longitudinal movement of the value selection rack. Such means can include an internal pinion and shaft in association with an helical gear, or a bevel gear and pinion gear arrangement acting on a toothed portion of the value selection rack.

Since value selection is achieved by rotating the appropriate gear wheel with respect to the print drum shaft when this shaft is in its stationary home position, some suitable mechanism needs to be provided to achieve this rotation of each gear wheel. In one common arrangement, this is simply achieved by providing an appropriate meshing gear train in which setting is achieved by actual rotation of so-called selector wheels, thereby directly inputting the value selection rotation to the corresponding gear wheel on the print drum shaft. The disadvantage with this arrangement is that during franking, rotation of the print drum shaft also causes the selector wheels to rotate, and this is potentially dangerous since an operator's fingers could be trapped between the selector wheels and the postage meter housing.

Another known arrangement includes value selection levers, one lever corresponding to each unit of value, the levers being set to discrete positions for each number associated with the particular value unit. This type of value selecting arrangement is disclosed in US-A-3 792 446 and in US-A-3 770 945. This arrangement has the disadvantage that exact setting of a particular number is difficult, since any free play in the lever and gear mechanism will tend to cause the mechanism to be set between two numbers.

According to one aspect of the invention, there is provided a push button position-changing mechanism characterised by
first and second push buttons,
a first actuating arm connected to the first push button and operable upon manual depression of the push button to engage a gear arrangement so as to provide a predetermined angular rotation of the gear arrangement in one direction for each manual depression,
a second actuating arm connected to the second push button and operable upon manual depression of the push button to engage the gear arrangement so as to provide a predetermined angular rotation of the gear arrangement in the opposite direction for each manual depression and
resilient means connecting each actuating arm to its respective push button and operable upon manual depression of the push button to allow the arm to be urged away from the gear arrangement in either direction during independent rotation of the gear arrangement thereby to avoid jamming of or damage to the mechanism when one of the push buttons is depressed during independent rotation of the gear arrangement.

According to another aspect of the invention, there is provided a value selection mechanism for a postage meter, the value selection mechanism comprising a number of push button decade value changing mechanisms corresponding to the number of value print wheels provided in a printing drum of the postage meter and to the number of decades in an accounting means of the meter, each decade value changing mechanism being characterised by
first and second push buttons for respectively effecting incrementally increasing and decreasing changes to the value of unit in the respective decade,
a first actuating arm connected to the first push button and operable upon manual depression of the push button to engage a gear arrangement so as to provide a predetermined angular rotation of the gear arrangement in one direction for each manual depression, the angular rotation of the gear arrangement being transmitted to the printing drum to effect a corresponding change in value of the respective print wheel and effecting a corresponding change in value at the accounting means,

a second actuating arm connected to the second push button and operable upon manual depression of the push button to engage the gear arrangement so as to provide a predetermined angular rotation of the gear arrangement in the opposite direction for each manual depression, the angular rotation of the gear arrangement being transmitted to the printing drum to effect a corresponding change in value of the respective print wheel and effecting a corresponding change in value at the accounting means, and

resilient means connecting each actuating arm to its respective push button and operable upon manual depression of the push button to allow the arm to be urged away from the gear arrangement in either direction during rotation of the gear arrangement caused by rotation of the print drum thereby to avoid jamming of or damage to the mechanism when one of the push buttons is depressed during rotation of the gear arrangement caused by rotation of the print drum.

It is known, for example from US-A-3 876 848 - (Hartmann) for a step switch mechanism for setting electrical coding switches to be actuated by two buttons, depression of one button rotating the switch by one unit in one direction, depression of the other button rotating the switch by one unit in the opposite direction. Thus, to set a decimal switch to the number "6" when it is already set at the number "4" would require two depressions of one button. Subsequently, to set the switch to the number "3" would require three depressions of the other button. However, in such a step switching mechanism for an electrical switch, no account needs to taken of the effect of mechanical feedback from the gear shaft being rotated, since in an electrical switch this shaft will only be connected to some suitable part of the switch such as an electrical wiper arrangement, and therefore no mechanical feedback will occur. However, were such a mechanism to be used in a mechanical system such as a postage meter, it may be the case that the shaft of the step switching mechanism will be rotated by action other than just depression of the push buttons. Thus in a postage meter, the above-described effect would take place in that, when the print drum shaft rotates, the value selection gear wheels on the print drum shaft would cause the gear shaft of the step switch mechanism to rotate and this may cause jamming of the push button mechanism if a push button were to be inadvertently pressed during a franking operation, in the absence of the above-described feature. Alternatively, rather than jamming the push button mechanism, an even more serious consequence might be to cause jamming and damage to the gear train.

The invention will now be described, by way of illustrative an non-limiting example, with reference to the accompanying drawings, in which:

Figure 1 is a partially-sectioned view through a push button mechanism according to on embodiment of the invention, for use in a postage meter;

Figure 2 is a plan view of the mechanism of Figure 1, with one of the buttons omitted for clarity;

Figure 3 is a view from underneath the mechanism, with the gear train shown in more detail; and

Figure 4 is a cross-section on the line 4-4 shown in Figure 2, and is similar to that of Figure 1, but showing more clearly the manner in which the various parts of one key button fit together;

Figure 5 is a plan view of a push button mechanism according to another embodiment of the invention, for use in a postage meter:

Figure 6 is a cross-section on the line 6-6 shown in Figure 5;

Figure 7 is a cross-section on the line 7-7 shown in Figure 6;

Figure 8 is a view from underneath the mechanism, with the gear and belt drive shown in more detail; and

Figure 9 is a cross-sectional view of one type of ratchet mechanism suitable for use in the embodiment shown in Figures 5 to 8.

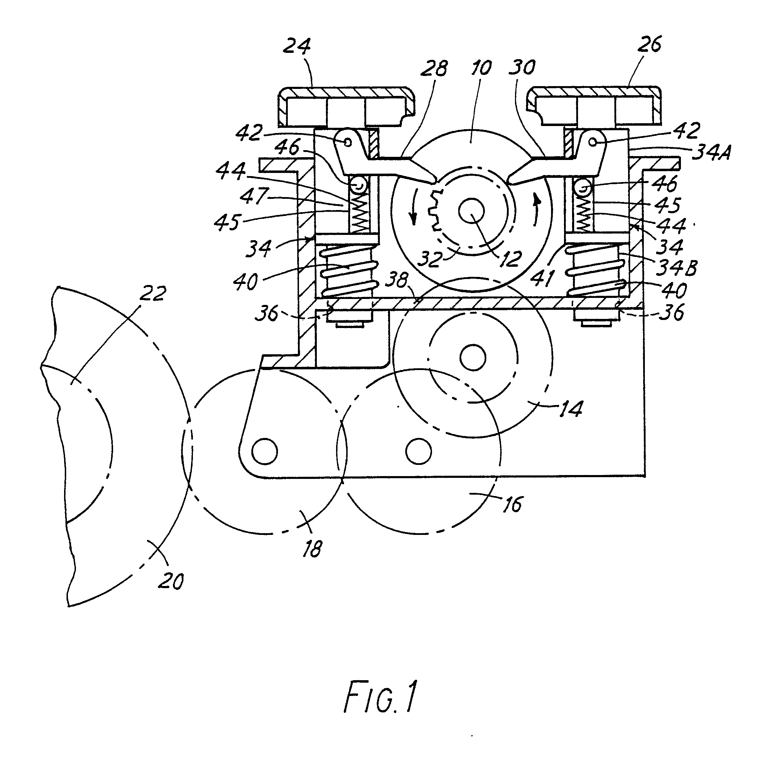

Referring to Figures 1 to 4 of the drawings, and initially in particular to Figure 1, one embodiment of the push button mechanism for one of the value selection gear wheels is shown. It will be appreciated that on each of these mechanisms will be provided for each required decade, therefore since four decades are commonly required in postage meters, four such mechanisms are provided in the illustrated embodiment. The number of mechanisms provided in any case will thus depend on the specific requirements. A value indicator wheel 10 is mounted on a shaft 12 in such a way that rotation of the value indicator wheel 10 is transmitted via a gear train (comprising gear wheels 14, 16, 18) to a value setting gear wheel 20 provided on a print drum shaft 22. Push buttons 24, 26 are provided for value selection, and respective actuating arms 28, 30 connected to the corresponding push buttons are arranged to act on either side of a geared portion 32 on the value indicator wheel 10. It will be seen that depression of one of push buttons 24, 26 will cause rotation of the value indicator wheel 10 since the appropriate one of the actuating arms 28, 30 will step the geared portion 32 on the value indicator wheel 10 in one direction or the other. The gearing of the geared portion 32 is arranged such that one depression of each push button 24 or 26 will cause printing and accounting values to be changed by a single digit. In one arrangment, each such depression will cause the value setting gear wheel 20 to move the corresponding value print wheel in the print drum by a single digit, and also cause the value accounting mechanism to be similarly altered. The geared portion 32 may have any suitable profile for engagement by the actuating arms 28, 30 and need not be a true gear form. As illustrated, the push button 24 will act in the positive sense to increase the value by one digit, and the push button 26 will act in the negative sense to decrease the value by one digit.

A problem arises in that when the print drum shaft 22 is rotating during a franking operation, this motion is transmitted back via the gear train including the wheels 14, 16, 18 to cause rotation of the value indicator wheel 10. If one of the push buttons 24, 26 were to be inadvertantly depressed at this stage, there could be jamming of an actuating arm 28, 30 with the geared portion 32. Therefore, means are provided to allow movement of the actuating arms 28, 30 relative to the geared portion 32, so as to avoid jamming and damage. This is partly achieved by allowing a limited amount of resilient pivoting movement in one direction of the actuating arms.

In order to provide a returning action, each push button mechanism includes an outer cylinder 34 extending through a retaining aperture 36 in a base plate 38 of the mechanism. The outer cylinder 34 comprises a part 34A of greater diameter and a part 34B of lesser diameter, the lesser diameter part 34B extending through the aperture 36. A spring 40 surrounds the lesser diameter part 34B, being seated against a step 41 between the greater and lesser diameter parts 34A, 34B. The parts thus far described simply allow the push button 24 or 26 to be depressed against the force of the spring 40, and when the pressure is removed, the spring 40 returns the push button 24 to its raised stable position.

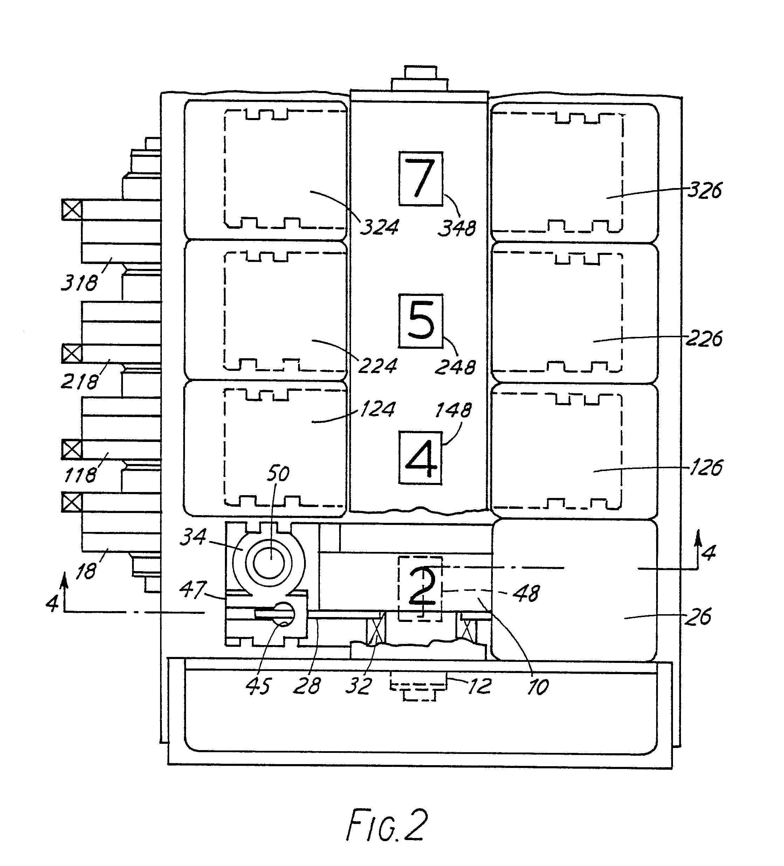

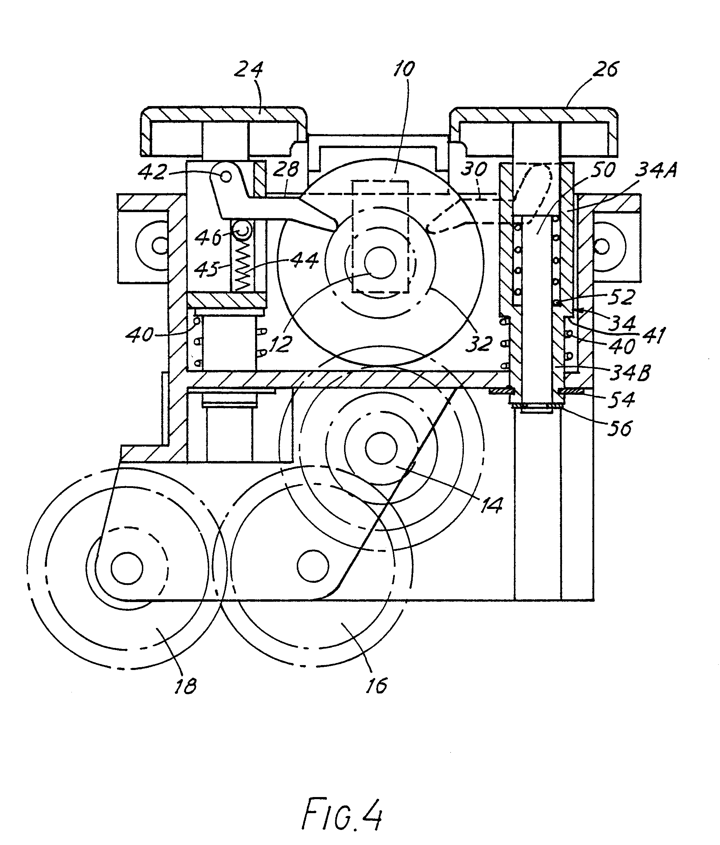

The actuating arm 28 is held relative to the outer cylinder 34 firstly by a pivot pin connection 42 which in itself would allow rotation of the arm 28 about that point, and secondly by a spring 44 and ball 46 arrangement in a bore 45 provided in an outrigger member 47 attached to or integral with the outer cylinder 34. Figure 2 shows the arrangement of the outrigger member 47 and actuating arm 28 relative to the outer cylinder 34. The spring 44 is chosen to be sufficiently strong to retain the actuating arms 28, 30 in their normal operating positions. On the other hand, the spring 44 must be sufficiently weak to allow the actuating arms 28, 30 to pivot downwardly away from the geared portion 32 upon return movement of the push buttons 24, 26 to their raised stable positions following a value changing depression, so as to move clear of the projections on the geared portion by a ratchet-like operation. The spring 44 has a further function. In the case of anti-clockwise rotation of the value indicator wheel 10 during a franking operation, if the push button 24 is inadvertantly pressed during such rotation, as soon as sufficient turning force is transmitted to the actuating arm 28 from the appropriate tooth of the geared portion 32, the ball 46 and spring 44 arrangement is pushed downwardly allowing the arm 28 to move away from the teeth without causing jamming. The mechanism to counteract jamming problems when the push button on the other side is depressed will be described later with reference to Figure 4. It will be appreciated that in a mechanism such as a postage meter, rotation should only take place in one direction, since the print drum shaft should always be rotating the same way.

Figure 2 shows a plan view of four mechanisms of the type shown in Figure 1, as may be used in a postage meter. Although the same reference numerals are used for similar parts to those shown in Figure 1 in respect of one mechanism, the other three mechanisms have similar reference numerals incremented by 100, 200 and 300 respectively. From the broken-away section in Figure 2, the co-axial arrangement of the outer cylinder 34 and stem portion 50 of the push button 24 can be seen. Also visible is the actuating arm 28 and the bore 45 provided in the outrigger member 47 for the spring 44 and ball 46 arrangement. Numerals indicative of the unit of postage value to be selected are conveniently printed on each of the value indictor wheels (the wheel 10 being shown in best detail). For this purpose, windows 48, 148, 248, 348 are provided between each of the respective push buttons for each mechanism, and the selected values can be clearly seen through these windows.

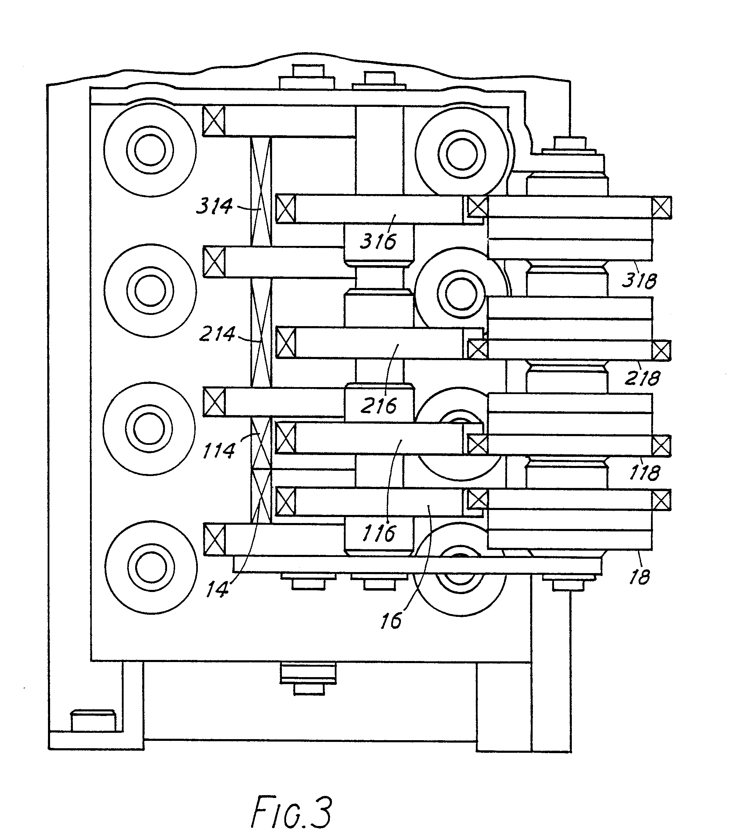

Figure 3 shows the gear trains provided to link the value selector wheels with the value setting gear wheels on the print drum shaft (not shown in Figure 3). It will be seen that, looking at the lowermost (as seen in the drawing) set of gears, each gear train consists of a gear wheel 14 acting on a gear wheel 16, which in turn acts on a gear wheel 18. The gear wheel 18 is provided so that it can act on the value setting gear wheel (20 in Figure 1) and allow value setting to take place in the home position only. Our co-pending European Patent Application No. (our ref E129/4) discloses further details of value setting gear wheels provided on a print drum shaft.

Figure 4 is a view similar to Figure 1, but in relation to the push button mechanism associated with the push button 26, the operating parts are shown in section through the button 26, the operating parts are shown in section through the outer cylinder 34 in order to illustrate operation of another aspect of the anti-jamming mechanism. The section is on line 4-4 of Figure 2. It was previously said that rotation tending to push the end of each actuating arm in a downward direction would not cause jamming by virtue of the spring and ball mechanism. In the case where the sense of rotation is such that the appropriate actuating arm would be pushed upwardly, prevention of jamming is achieved by the mechanism shown on the right hand side of Figure 4, in relation to the push button 26. The outer cylinder 34 can clearly be seen to include the two parts of greater and lesser diameter 34A and 34B. The stem portion 50 of the push button 26 passes right through the outer cylinder 34 and is held in position relative thereto by a spring 52. The spring 52 is considerably stronger than the spring 40. Thus in normal operation, the stem portion 50 of the push button 26 and the outer cylinder 34 will move together, and the actuating arm 30 (shown in dotted outline) will step on the value indicator wheel 10 accordingly. However, when the value indictor wheel 10 is turning - (by virtue of rotation of the print drum shaft) in a sense to force the actuating arm upwardly in the case of inadvertant depression of push button 26, this causes the outer cylinder 34 to be forced upwardly against the pressure of the spring 52 and hence to rise with respect to the stem portion 50 of the depressed push button 26, and therefore the actuating arm 30 is urged away from the geared portion 32 on the value indicator wheel 10. Also shown in Figure 4 is a circlip 54 for limiting upward movement of the outer cylinder 34, and also a further circlip 56 for limiting upward movement of the stem portion 50 relative to the outer cylinder 34.

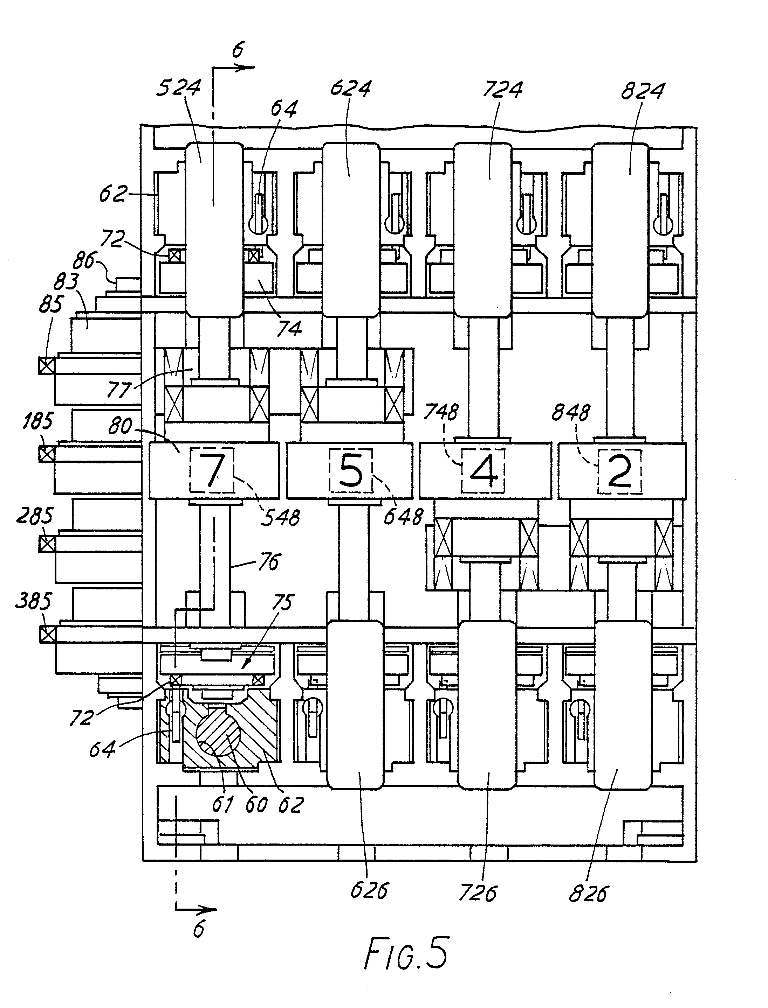

Although the mechanism has been described as being disposed such that the four push button mechanism and the shaft 12 on which the value selector wheels are mounted are parallel to the print drum shaft and can therefore act directly on the value setting gear wheels 20 via the gear train, it is also possible to arrange the push button mechanism in a different orientation. That is to say, the disposition of the push buttons seen in plan is at a right angle to the scheme shown in Figure 2. Figure 5 shows a second embodiment in which the array of push buttons is arranged at a right angle to the print drum shaft, when compared to Figure 2.

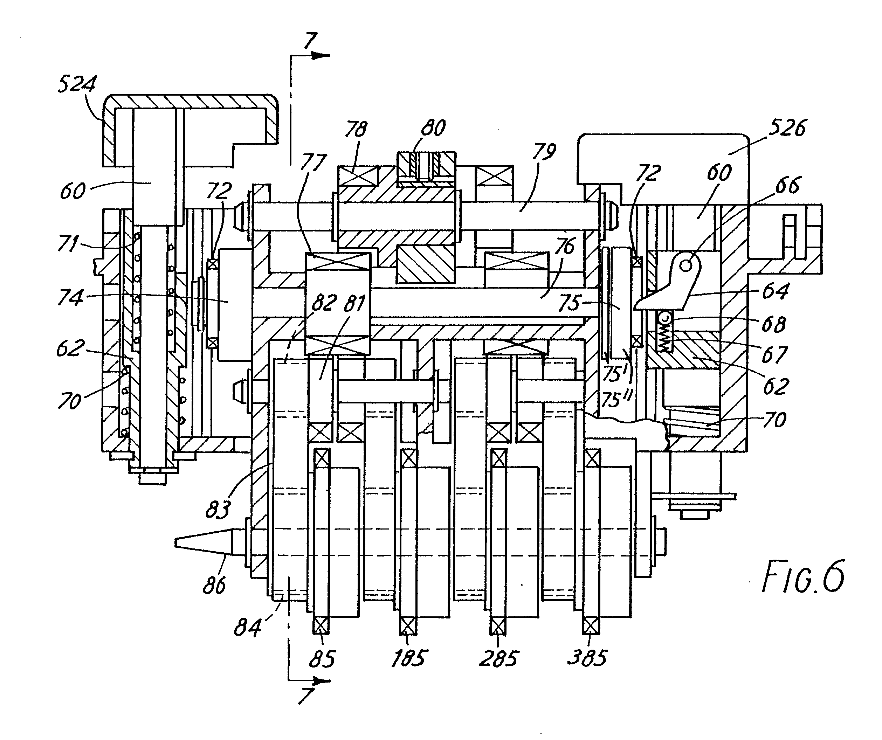

Referring to Figure 5, again four push button mechanisms are shown, the push buttons being referenced 524, 624, 724, 824 along one bank, and referenced 526, 626, 726, 826 along the other bank. One bank provides increase in value and the other bank provides a corresponding decrease. Since the basic construction and operation of each mechanism is similar, only that associated with push buttons 524, 526 will be described in detail. Each push button has its stem portion 60 located within a bore 61 of a housing member 62. The housing member 62 is functionally equivalent to the outer cylinder 34 and outrigger member 47 of the first embodiment in that as well as retaining the push button, it also retains an actuating arm 64. Referring to Figures 5 and 6, the actuating arm 64 is pivoted about a pin 66 and is biased against downward movement by a spring 67 and ball 68 arrangement, as in the first embodiment. Again, as in the first embodiment, one spring 70 is provided to bias the housing member 62 upwardly, and a second spring 71 is provided to bias the push button 524, or 526 upwardly relative to the housing member 62. The operation of this part of the mechanism is identical to that of the first embodiment. However, instead of stepping on opposite sides of a geared portion of a single value indicator wheel (as in the first embodiment), the actuating arms 64 are arranged to act on geared portions 72 of a wheel 74 and a ratchet wheel 75 (whose function will be explained below) fixed to a common shaft 76. Thus for positive increments of value, depression of push button 524 will cause its respective actuating arm 64 to act on the wheel 74 causing rotation of the shaft 76 in one direction. For negative increments, depression of push button 526 will cause the right hand actuating arm 64 to act on the ratcheted wheel 75 to cause shaft 76 to rotate in the opposite direction. Thus this mechanism provides rotation of the shaft 76 about an axis at right angles to the rotational axis of the value indicator wheel 10 of Figure 2.

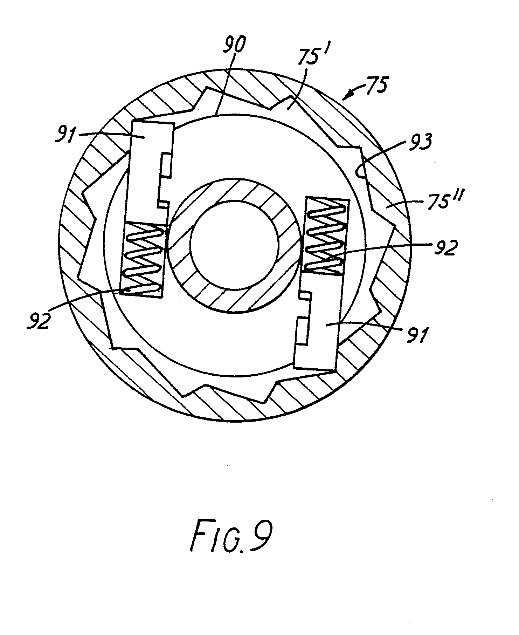

The ratcheted wheel 75 includes a first part 75' fixed to the shaft 76 and a second part 75" carrying the geared portion 72. The first and second parts 75', 75" are connected by an internal ratchet mechanism allowing the second part 75" to rotate relative to the first part 75' (and hence relative to the shaft 76) in one direction, but to cause both parts to move together during rotation in the other direction. This provides further anti-jamming protection and is required as a result of the actuating arm 64 operating at right angles to the plane of the ratcheted wheel 75. If the push button 526 is depressed during rotation of the shaft 76 in the course of a franking operation, any jamming effect resulting from the actuating arm 64 and the geared portion 72 contracting as a result of movement in the same direction will cause the ratchet mechanism to slip and thus the second part 75" of the ratcheted wheel 75 will stop rotating, preventing damage to the geared portion 72 and/or the actuating arm 64. Once the push button 526 has been released and the actuating arm 64 moves clear of the geared portion 72, the first and second parts 75', 75" of the ratcheted wheel 75 will rotate together again. Since rotation of the shaft 76 caused by franking is in one direction only (as explained above), a similar mechanism is not required to the other side for operation of the key button 524, since the direction of rotation relative to the disposition of the actuating arm 64, in particular its direction of action upon depression of key button 524, will not cause this jamming effect. One type of ratchet wheel 75 will be described below with reference to Figure 9.

Referring to Figures 5 and 6, for selected value display, each shaft 76 carries a gear 77 meshing with another gear 78 on a display shaft 79. The gear 78 forms part of a display indicating member 80 which carries numerals indicative of the unit of selected value, and these numerals can readily be seen through windows 548, 648, 748, 848.

The gear 77 on shaft 76 is also arranged to mesh with a further gear 81 which is connected to a toothed wheel 82. An endless toothed belt 83 connects the wheel 82 to another toothed wheel 84. The latter toothed wheel 84 is fixedly connected to a gear 85, both being mounted for rotation on a shaft 86.

The other mechanisms are arranged in a functionally similar manner, such that the shaft 86 carries gears 85, 185, 2825, 385 each mounted to be individually rotatable on the shaft 86. These gears are equivalent to the gears 18, 118, 218, 318 of the first embodiment, and are also arranged to act on value setting gear wheels provided on the print drum shaft (the value setting gear wheels being referenced 20 in Figure 1, and the print drum shaft being referenced 22).

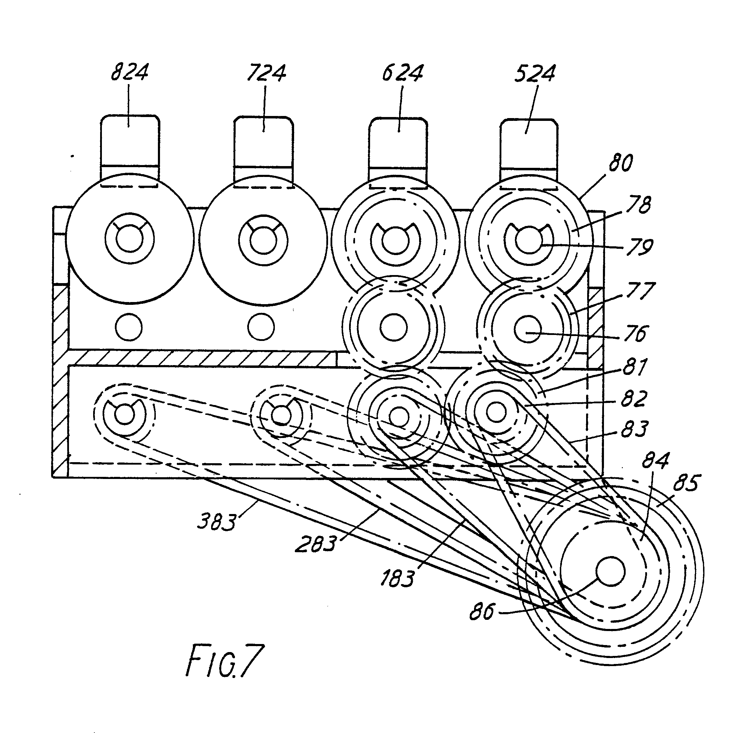

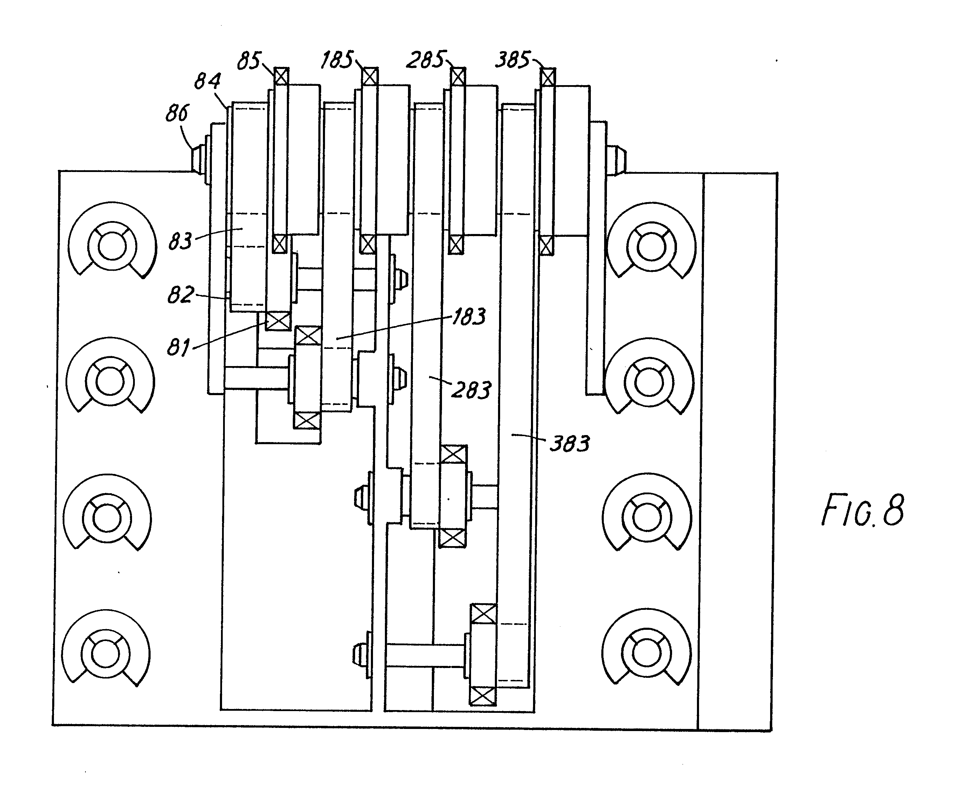

Figure 7 shows in clearer detail how the various toothed belts 83 (also 183, 283, 383) are connected between the individual push button mechanisms and the gears 85,185,285,385, as does Figure 8 from underneath. Gear trains similar to those of the first embodiment could be used instead of the toothed belts, but this is less preferred since the distances to be bridged by the gear trains are different (due to the transverse arrangement of push button mechanisms relative to shaft 86), differences in force required to activate each push button mechanism would result from having dissimilar gear trains for each mechanism; also the gear trains would need to be complex, particularly those furthest from the shaft 86.

It will be apparent that the gearing of the value setting path, including geared portion 72 of the wheel 74, gears 77 and 81, toothed wheels 82, 84 and toothed belt 83, and gear wheel 85, must be arranged such that for each depression of push button 524 or 526, the gear wheel 85 decrements or increments the value setting mechanism on the print drum shaft (and hence the print wheels on the print drum) as well as the value accounting mechanism by one unit.

Figure 9 shows one suitable type of ratcheted wheel 75 which can be used in the embodiment of Figures 5 to 8. The first part 75' has a circular part 90 of lesser diameter than the wheel 75 projecting into the hollow interior of the second part 75". The circular part 90 carries two plungers 91 which are biased outwardly by springs 92. The second part 75" has an internally profiled surface 93 which in association with the plungers 91 acts as a ratchet mechanism. It will be seen that rotation of the circular part 90 of the first part 75' is possible in a clockwise direction relative to the second part 75", since the plungers 91 will be urged agaisnt the springs 92 by the profiled surface 93. However rotation will not be possible in the anticlockwise direction, since the plungers 91 are positioned with their sides against the profiled surface 93. Thus there is no force component urging the plungers to be depressed against the spring force, and the parts 75' and 75" will be locked to rotate together in the anticlockwise direction.

While two specific constructions of push button mechanism have been illustrated and described, it will be apparent that detail variations could be made to these specific constructions, for example to the particular manner in which rotational motion is transferred to the output drive shaft of the mechanism, and such alterations are considered to be within the scope of the invention.

**Claims**

1. A push button position-changing mechanism characterised by

first (24;524) and second (26;526) push buttons,

a first actuating arm (28;64) connected to the first push button (24;524) and operable upon manual depression of the push button to engage a gear arrangement (32;72,76) so as to provide a predetermined angular rotation of the gear arrangement in one direction for each manual depression,

a second actuating arm (30;64) connected to the second push button (26;526) and operable upon manual depression of the push button to engage the gear arrangement (32;72,76) so as to provide a predetermined angular rotation of the gear arrangement in the opposite direction for each manual depression, and

resilient means (45,46,52;67,68,71) connecting each actuating arm (28,30;64) to its respective push button (24,26;524,526) and operable upon manual depression of the push button to allow the arm to be urged away from the gear arrangement - (32;72,76) in either direction during independent rotation of the gear arrangement thereby to avoid jamming of or damage to the mechanism when one of the push buttons is depressed during independent rotation of the gear arrangement.

2. A mechanism according to claim 1, wherein the gear arrangement comprises a geared portion - (32) on a wheel (10), and the first and second actuating arms (28,30) are disposed on opposite sides of the geared portion(32).

3. A mechanism according to claim 2, wherein the first and second actuating arms (28,30) are arranged substantially in the plane of the geared portion (32) on the wheel (10).

4. A mechanism according to claim 1, wherein the gear arrangement comprises a shaft (76) with first and second gear wheels(72) fixed thereto, the first and second actuating arms (64) being arranged to engage respectively the first and second gear wheels (72).

5. A mechanism according to claim 4, wherein the first and second actuating arms (64) are disposed substantially orthogonal to the planes of the respective first and second gear wheels (72).

6. A mechanism according to claim 5, wherein a ratchet mechanism (75) is associated with one of the first and second gear wheels (72) to avoid jamming between the gear wheel (72) and its corresponding actuating arm (64).

7. A mechanism according to any one of the preceding claims, wherein the resilient means comprises a member (34,47) to which the respective actuating arm (28,30) is pivotably attached, the resilience in one direction being provided by a first spring (44) acting on the actuating arm (28, 30).

8. A mechanism according to claim 7, comprising a second spring (40) between the member - (34,47) and a housing (38) of the mechanism to provide a return force upon depression of the respective push button (24,26).

9. A mechanism according to claim 8, wherein the member (34,47) includes a bore, a stem portion (50) of the respective push button (24,26) fitting in the bore, and a third spring (52) being provided between abutments on the push button (24,26) and on the member (34, 47), so as to allow resilient movement of the actuating arm(28,30) in the opposite direction.

10. A mechanism according to any one of the preceding claims, wherein the gear arrangement - (32;72,76) includes a display drum (80) indicating a number corresponding to the angular position of the gear arrangement, the number being incremented or decremented by one unit when one or other of the push buttons is depressed.

11. A value selection mechanism for a postage meter, the value selection mechanism comprising a number of push button decade value changing mechanisms corresponding to the number of value print wheels provided in a printing drum of the postage meter and to the number of decades in an accounting means of the meter, each decade value changing mechanism being characterised by first (24;524) and second (26;526) push buttons for respectively effecting incrementally increasing and decreasing changes to the value of unit in the respective decade, a first actuating arm(28;64) connected to the first push button (24;524) and operable upon manual depression of the push button to engage a gear arrangement (32;72,76) so as to provide a predetermined angular rotation of the gear arrangement in one direction for each manual depression, the angular rotation of the gear arrangement being transmitted to the printing drum to effect a corresponding change in value of the respective print wheel and effecting a corresponding change in value at the accounting means, a second actuating arm (30;64) connected to the second push button (26;526) and operable upon manual depression of the push button to engage the gear arrangement(32;72,76) so as to provide a predetermined angular rotation of the gear arrangement in the opposite direction for each manual depression, the angular rotation of the gear arrangement being transmitted to the printing drum to effect a corresponding change in value of the respective print wheel and effecting a corresponding change in value at the accounting means, and resilient means (45,46,52;67,68,71) connecting each actuating arm (28,30;64) to its respective push button (24,26;524,526) and operable upon manual depression of the push button to allow the arm to be urged away from the gear arrangement (32;72,76) in either direction during rotation of the gear arrangement caused by rotation of the print drum thereby to avoid jamming of or damage to the mechanism when one of the push buttons is depressed during rotation of the gear arrangement caused by rotation of the print drum.

12. A mechanism according to claim 11, wherein the rotational drive to value setting gear wheels (20) associated with the print drum is provided by a gear train (14,16,18) from the gear arrangement (32;72,76) of each decade value changing mechanism to the value setting gear wheels (20).

13. A mechanism according to claim 12, wherein the rotational drive is partially transmitted by a toothed wheel (82,84) and endless belt (83) arrangement for each decade value changing mechanism.

14. A postage meter including a value selection mechanism according to claim 11, claim 12 or claim 13.

FIG.1

FIG.2

FIG.3

FIG.4

FIG.5

FIG. 6

824  724  624  524

80
78
79

77
76

81
82
83

84
85

383

283

183

86

FIG.7

FIG.8

0 224 620

FIG.9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 507 003  (BECTON, DICKINSON AND COM.) <br> * Whole document * | 1-3,10 | G 07 B    17/00 <br> F 16 H    31/00 |
| A | US-A-3 748 915  (WINTER et al.) <br> * Whole document * | 1-3,10 | |
| A | US-A-3 845 899  (IRIE et al.) <br> *  Column  6, line 35 - column 7, line 12; figures 6,7a * | 1,7,8 | |
| A | US-A-3 852 554  (HEIDE) <br> * Whole document * | 1-3,10 | |

TECHNICAL FIELDS
SEARCHED (Int. Cl.4)

F 16 H
G 05 G
H 01 H
G 07 B
G 06 M

The present search report has been drawn up for all claims

| Place of search | Date of completion of the search | Examiner |
|---|---|---|
| THE HAGUE | 17-07-1986 | MENDE H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82